# EUROPEAN PATENT SPECIFICATION

(11) **EP 1 355 372 B1**
(45) Date of publication and mention of the grant of the patent: **15.08.2007**
(21) Application number: 03252111.4
(22) Date of filing: 03.04.2003
(51) Int. Cl.: H01M 8/06, C01B 3/06, B01J 7/02

(54) **Apparatus and method for gas generation in a fuel cell**
Vorrichtung und Verfahren zur Erzeugung von Gas in einer Brennstoffzelle
Dispositif et procédé pour la production d'un gaz dans une pile combustible

(30) Priority: 16.04.2002 US 124080
(43) Date of publication of application: 22.10.2003
(73) Proprietor: Hewlett-Packard Company, Palo Alto, CA 94304 (US)
(72) Inventor: Prasad, Ravi, Corvallis, OR 97330 (US); Devos, John A., Corvallis, OR 97330 (US); Harding, Philip, Albany, OR 97321 (US); Tsang, Jospeh W., Corvallis, OR 97330 (US)
(74) Representative: Jackson, Richard Eric

(56) References cited:
- EP-A- 1 170 249
- DE-A- 10 045 669
- US-A- 4 155 712
- US-A- 4 261 955
- US-A- 5 514 353
- US-A- 5 976 725
- US-A1- 2001 045 364

## Description

### FIELD OF THE INVENTION

This invention relates to the field of gas generation. More specifically, the present invention relates to a method of gas generation in a fuel cell as well as a gas generation system which is part of a fuel cell apparatus.

### BACKGROUND OF THE INVENTION

Over the past century the demand for energy has grown exponentially. With the growing demand for energy, many different energy sources have been explored and developed. One of the primary sources for energy has been and continues to be the combustion of hydrocarbons. However, the combustion of hydrocarbons usually results in incomplete combustion and non-combustibles that contribute to smog and other pollutants in varying amounts.

As a result of the pollutants created by the combustion of hydrocarbons, the desire for cleaner energy sources has increased in more recent years. With the increased interest in cleaner energy sources, fuel cells have become more popular and more sophisticated. Research and development on fuel cells has continued to the point that many speculate that fuel cells will soon compete with the gas turbine for generating large amounts of electricity for cities, the internal combustion engine for powering automobiles, and batteries that run a variety of small and large electronics.

Fuel cells conduct an electrochemical energy conversion of hydrogen and oxygen into electricity and heat. Fuel cells are similar to batteries, but they can be "recharged" while providing power.

Fuel cells provide a DC (direct current) voltage that may be used to power motors, lights, or any number of electrical appliances. There are several different types of fuel cells, each using a different chemistry. Fuel cells are usually classified by the type of electrolyte used. The fuel cell types are generally categorized into one of five groups: proton exchange membrane (PEM) fuel cells, alkaline fuel cells (AFC), phosphoric-acid fuel cells (PAFC), solid oxide fuel cells (SOFC), and molten carbonate fuel cells (MCFC).

### PEM Fuel Cells

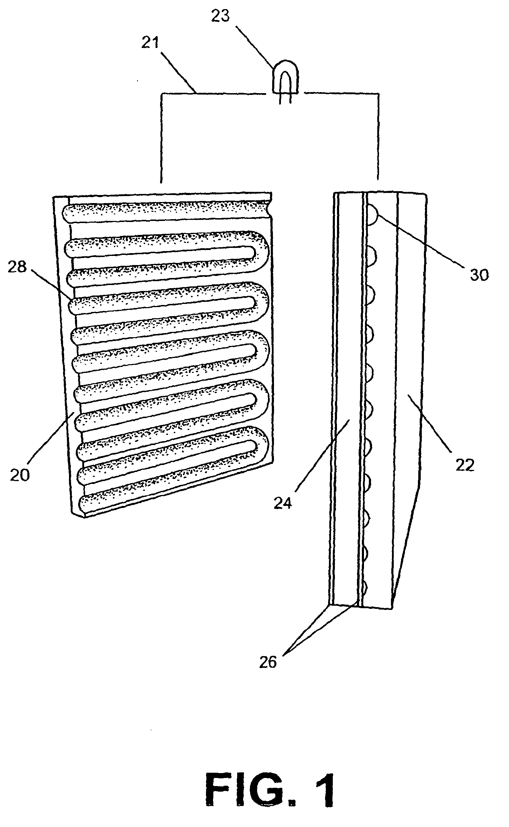

The PEM fuel cells are currently believed to be the most promising fuel cell technology, and use one of the simplest reactions of any fuel cell. Referring to FIG. 1, a PEM fuel cell will typically include four basic elements: an anode (20), a cathode (22), an electrolyte (PEM) (24), and a catalyst (26) arranged on each side of the electolyte (24).

Anode (20) is the negative post of the fuel cell and conducts electrons that are freed from hydrogen molecules such that the electrons can be used in an external circuit (21). Anode (20) includes channels (28) etched therein to disperse the hydrogen gas as evenly as possible over the surface of catalyst (26).

Cathode (22) is the positive post of the fuel cell, and has channels (30) etched therein to evenly distribute oxygen (usually air) to the surface of catalyst (26). Cathode (22) also conducts the electrons back from the external circuit to the catalyst, where they can recombine with the hydrogen ions and oxygen to form water. Water is the only by-product of the PEM fuel cell.

The electrolyte (24) is the proton exchange membrane (PEM) (24). The PEM is a specially treated porous material that conducts only positively charged ions. PEM (24) prevents the passage of electrons.

Catalyst (26) is typically a platinum powder thinly coated onto carbon paper or cloth. Catalyst (26) is usually rough and porous so as to maximize the surface area of the platinum that can be exposed to the hydrogen or oxygen. Catalyst (26) facilitates the reaction of oxygen and hydrogen.

In a working fuel cell, PEM (24) is sandwiched between anode (20) and cathode (22).

The operation of the fuel cell can be described generally as follows. Pressurized hydrogen gas (H₂) enters the fuel cell on the anode (20) side. When an H₂ molecule comes into contact with the platinum on catalyst (26), it splits into two H⁺ ions and two electrons (e⁻). The electrons are conducted through the anode (20), where they make their way through external circuit (21) that may be providing power to do useful work (such as turning a motor or lighting a bulb (23)) and return to the cathode side of the fuel cell.

Meanwhile, on the cathode (22) side of the fuel cell, oxygen gas (O₂) is being forced through the catalyst (26). In some PEM fuel cell systems the O₂ source may be air. As O₂ is forced through catalyst (26), it forms two oxygen atoms, each having a strong negative charge. This negative charge attracts the two H⁺ ions through PEM (24), where they combine with an oxygen atom and two of the electrons from the external circuit to form a water molecule (H₂0).

The PEM fuel cell reaction just described produces only about 0.7 volts, therefore, to raise the voltage to a more useful level, many separate fuel cells are often combined to form a fuel cell stack.

PEM fuel cells typically operate at fairly low temperatures (about 80° C/176° F), which allows them to warm up quickly and to be housed in inexpensive containment structures because they do not need any special materials capable of withstanding the high temperatures normally associated with electricity production.

### Hydrogen Generation for Fuel Cells

As discussed above, each of the fuel cells described uses oxygen and hydrogen to produce electricity. The oxygen required for a fuel cell is usually supplied by the air. In fact, for the PEM fuel cell, ordinary air is pumped into the cathode. However, hydrogen is not as readily available as oxygen.

Hydrogen is difficult to generate, store and distribute. One common method for producing hydrogen for fuel cells is the use of a reformer A reformer turns hydrocarbons or alcohol fuels into hydrogen, which is then fed to the fuel cell. Unfortunately, reformers are problematic. If the hydrocarbon fuel is gasoline or some of the other common hydrocarbons, SOₓ, NOₓ and other undesirable products are created. Sulfur, in particular, must be removed or it can damage the electrode catalyst. Reformers usually operate at high temperatures as well, which consumes much of the energy of the feedstock material. Hydrogen may also be created by low temperature chemical reactions utilizing a fuel source in the presence of a catalyst. However, many problems are associated with low temperature chemical reactions for producing hydrogen. One of the primary problems is the separation of the hydrogen from the other products of the chemical reaction. As hydrogen is generated from a fuel source such as an alkali metal hydride or a borohydride, the reactions generate foam or froth. Typically, the hydrogen produced in the reaction chamber is separated by a unit discrete from the reactor.The separation scheme is typically a gravity-aided disengagement chamber to break the foam generated in the reactor. A discrete separator adds to the process time and equipment cost associated with hydrogen production for fuel cells. And even with the use of a discrete separator, the flow through the reactor tends to become unstable and difficult to control due to the formation of the froth. The lack of control problem is exacerbated by the need for very low flow rates for hydrogen generation in portable power applications.

In addition, conventional technologies for producing hydrogen, including those using sodium borohydride (NaBH₄) as the fuel source focus on batched processes, in which only a discrete amount of hydrogen can be produced at a time. Further, in batched processes, any precipitates resulting from the hydrogen-producing reaction collect in the reaction chamber itself.

Additionally, the frothing in the reaction chamber as hydrogen bubbles are formed increases the backpressure of the fuel source. If it is desirable to continuously produce the hydrogen, the pressure of the fuel source must be constantly increased to overcome the backpressure caused by the frothing hydrogen bubbles. The backpressure may even rise to a level exceeding the pump capacity, at which point no flow through the reactor can be accomplished.

Some have added the catalyst in a controlled fashion to slow the speed of the reaction to minimize frothing and reduce or eliminate the need for a hydrogen separator, but slowing the reaction decreases the amount of hydrogen available to the fuel cell and complicates the reactor by requiring equipment to carefully control the administration of the catalyst.

### SUMMARY OF THE INVENTION

The present invention provides, among other things, a fuel cell apparatus comprising a gas generation system including a chemical reactor, a liquid/gas separator integrated with said chemical reactor, where said reactor has an inlet for receiving a continuous stream of aqueous solution and an outlet for allowing the passage of the solution out of the reactor.

### BRIEF DESCRIPTION OF THE DRAWINGS

The foregoing and other features and aspects of the invention will become further apparent upon reading the following detailed description and upon reference to the drawings in which:

FIG. 1 is an unassembled perspective view of a fuel cell apparatus.

FIG. 2 is a cut-away view of a gas generation system according to one embodiment of the present invention.

FIG. 3 is a cut-away view of a reactor according to one embodiment of the present invention.

FIG. 4 a cut-away view of a reactor according to one embodiment of the present invention.

FIG. 5 is a cut-away view of a reactor according to one embodiment of the present invention.

FIG. 6 is a cut-way view of a reactor according to one embodiment of the present invention.

FIG. 7 is a cut-away view of a cartridge according to one embodiment of the present invention.

Throughout the drawings, identical reference numbers designate similar, but not necessarily identical, elements.

### DETAILED DESCRIPTION OF THE EMBODIMENTS

Illustrative embodiments of the invention are described below.

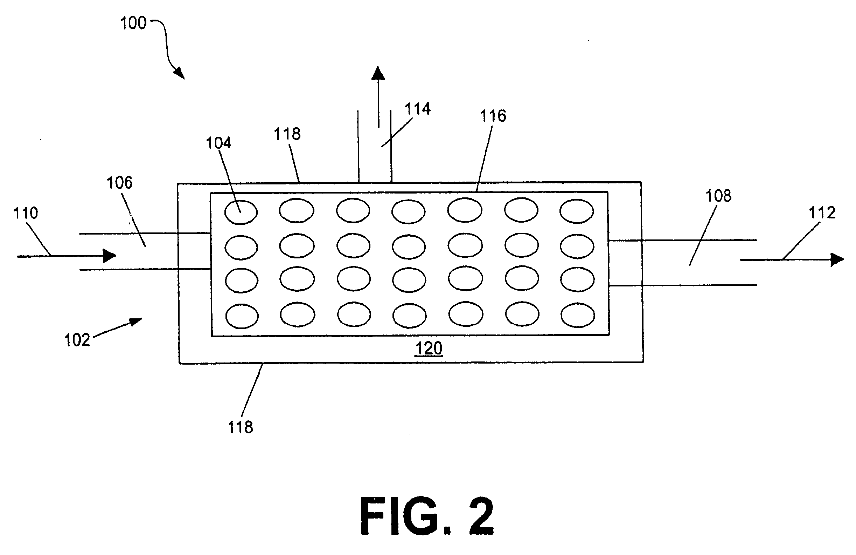

Turning now to the drawings, and in particular to FIG. 2, a gas generation system (100) is shown. In one implementation, gas generation system (100) may provide hydrogen gas to a fuel cell. However, gas generation system (100) may be used for any integrated liquid/gas separation need.

When gas generation system (100) is used to generate hydrogen gas, the hydrogen gas may, for example be used by a PEM fuel cell similar to the one shown in FIG. 1. However, it will be understood by one of skill in the art having the benefit of this disclosure that gas generation system (100) may be used for other fuel cells as well.

According to the embodiment of FIG. 2, gas generation system (100) may include a chemical reactor such as reactor (102). Reactor (102) as shown is preferably a generally cylindrical chamber, but this is not necessarily so. Any convenient shape for reactor (102) may be used. Reactor (102) may be constructed of metal, plastic, ceramic, composite, or other materials. Reactor (102) may be any container adapted to house a chemical reaction.

Reactor (102) may include a catalyst disposed therein, for example, catalyst beads (104) shown in FIG. 2. Catalyst beads (104) may increase the rate of reaction within reactor (102) as desired by an operator. The even distribution of catalyst beads (104) may be important, and therefore a mechanism for maintaining the distribution of catalyst beads (104) or catalysts of another form may be included. A discussion of catalyst distribution structures is found below.

Catalyst beads (104) may include ruthenium, platinum, nickel, or other catalytic material. Ruthenium, platinum, nickel, and other catalysts are readily available to those of skill in the art having the benefit of this disclosure.

Reactor (102) includes an inlet (106) for receiving a continuous stream of aqueous solution, and an outlet (108) for allowing the passage of the solution out of the reactor (102). The continuous stream of aqueous solution may flow into and out of reactor (102) according the direction of arrows (110) and (112). In the embodiment shown in FIG. 2, inlet (106) is preferably offset from a center axis of reactor (102), for example at a position above the center of reactor (102) with respect to the ground. The outlet (108) is shown at a position below inlet (106). However, the positioning of inlet (106) and outlet (108) may be altered from that shown in FIG. 2 according to any specific needs (e.g. maintaining certain flow regimes, etc.).

Reactor (102) also includes a gas outlet (114) providing a path for gas generated in the reactor (102). Gas generated in reactor (102) may be separated from the continuous stream of aqueous solution by an integrated liquid/gas separator such as hydrophobic membrane (116). Hydrophobic membrane (116) is shown in the present embodiment adjacent to and surrounding or wrapping around catalyst beads (104). While hydrophobic membrane (116) is shown inside of reactor (102) covering the interior of porous wall (118) of reactor (102), hydrophobic membrane (116) may also be wrapped around the outside of porous wall (118) in some embodiments. Hydrophobic membrane (116) may be made, at least in part, of Gortex^{®}, Celgard^{®}, or other materials.

Hydrophobic membrane (116) is a liquid impermeable/gas permeable membrane that operates to separate gas generated in reactor (102) from the stream of aqueous solution. The introduction of hydrophobic membrane (116) to the reactor (102) advantageously provides an integral liquid/gas separator that heretofore required two discrete units.

The integral reactor/separator may also be supplemented by hydrophilic screens (discussed below) at inlet (106) and/or outlet (108).

The aqueous solution used to generate gas in reactor (102) may be, in some embodiments, hydrogen fuel sources such as a metal hydrides including borohydrides and alkali metal hydrides. The gas produced by metal hydrides in aqueous solutions is hydrogen, which may be provided to a fuel cell. In one embodiment, the metal hydride is sodium borohydride and is passed through reactor (102) to produce hydrogen gas. The reaction of sodium borohydride with water to form hydrogen is a relatively low-temperature reaction (usually less than the boiling temperature of the aqueous solution or a maximum material compatibility temperature of some other reactor component), allowing the use of the hydrophobic membrane (106) made, at least in part, of conventional materials such as Gortex^{®} and Celgard^{®} in the reactor (102) itself.

Because of the integrated separator function of hydrophobic membrane (116), generated gasses such as hydrogen may escape the reactor, enter gas container area (120), and reduce or prevent the formation of foam or froth within reactor (102). Therefore, the flow of aqueous solution requires only nominal pressure (< 50 psi) to keep the fluid moving through the reactor, whereas in other reactors without an integrated separator gas bubbles may raise the backpressure within the reactor to ever-increasing levels. Backpressure in conventional gas reactors may even exceed the pump capacity in some applications, bringing production to a standstill.

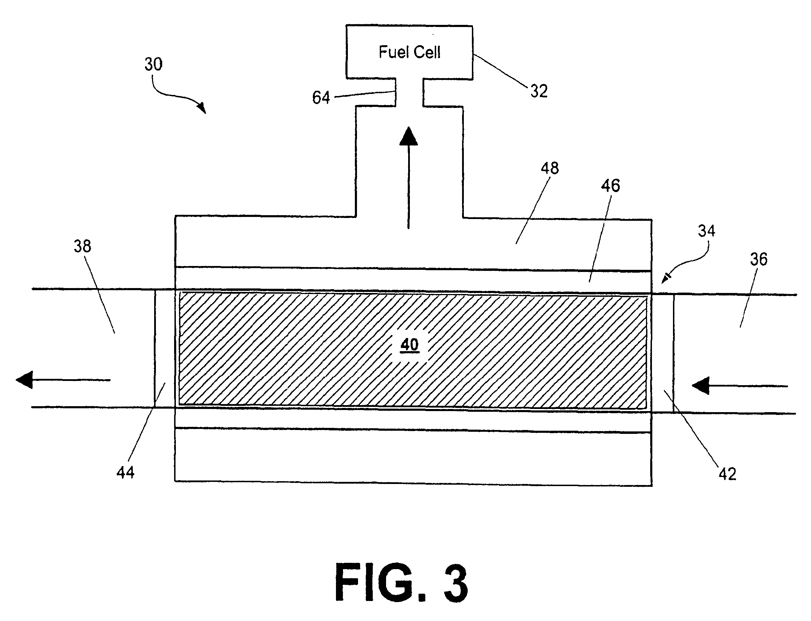

Referring next to FIG. 3, gas generation system (100a) is shown embodied as a hydrogen production system. Hydrogen production system (100a) may provide hydrogen to fuel cell (32) or other apparatus requiring hydrogen. For example, hydrogen production system (100a) may provide hydrogen to a PEM fuel cell similar to the one shown in FIG. 1. It will be understood by one of skill in the art having the benefit of this disclosure that hydrogen production system (100a) may be used for other fuel cells as well.

According to the embodiment of FIG. 3, hydrogen production system (100a) may include a reactor such as reaction chamber (34). Reaction chamber (34) includes a generally cylindrical shape as shown in the figure, but this is not necessarily so. Any convenient shape for reaction chamber (34) may be used. Reaction chamber (34) may be made of metal, plastic, ceramic, composite or other materials.

Reaction chamber (34) may include a catalyst disposed therein, for example the porous catalyst bed (40) shown in the figure. Catalyst bed (40) may facilitate the production of hydrogen gas by increasing the rate of reaction of a fuel source. The catalyst may include a ruthenium catalyst, a platinum catalyst, a nickel catalyst, or other catalyst. Ruthenium, platinum, nickel, and other catalysts are readily available to those of skill in the art having the benefit of this disclosure.

Catalyst bed (40) may facilitate the production of hydrogen gas in the presence of a borohydride. For example, an aqueous sodium borohydride solution in the presence of catalyst bed (40) results in the release of hydrogen gas according to the following chemical equation:

NaBH₄ + 2H₂O → 4H₂ + NaBO₂ (1)

Reaction chamber (34) has an inlet (36) for receiving a hydrogen fuel source such as sodium borohydride and an outlet (38) for discharging waste products and reactants in a continuous manner. Reaction chamber (34) may thus advantageously facilitate continuous production of hydrogen gas as opposed to a batched process. "Continuous," as used in this disclosure, means that a flow of reactants and products may enter and exit reaction chamber (34) while the reaction is taking place. In other words, the production of hydrogen may not continue ad infinitum because of, for example, the need to clean the reactor, the need to exchange the catalyst, a temporary deactivation of the system being fed hydrogen gas, etc. However, absent such reasons for halting the reaction, the reactants and products may flow through reaction chamber (34) for an indefinite period of time. "Continuous" may also encompass the recycling of products and reactants back through reaction chamber (34) to facilitate more complete utilization of the fuel source.

Located at the inlet (36) and outlet (38) of reaction chamber (34) may be hydrophilic screens (42) and (44). Hydrophilic screens (42) and (44) readily allow the passage of liquid solutions therethrough. However, they prohibit the passage of all or substantially all hydrogen gas. Hydrophilic screens (42) and (44) may each include a stainless steel filter screen. The effective pore sizes of hydrophilic screens (42) and (44) are selected to balance pressure drop and bubble pressure to ensure liquid/gas separation. It is within the purview of the skilled artisan having the benefit of this disclosure to select an appropriate hydrophilic screen pore size according to the specific needs of the application. For example a stainless steel filter screen with an effective pore size of 6 µm may be chosen for some applications.

In some embodiments, only one of hydrophilic screens (42) and (44) may be used at either inlet (36) or outlet (38).

Reaction chamber (34) may also include a hydrophobic membrane (46) surrounding catalyst bed (40) for lining an internal or external surface of the reaction chamber (34). In the embodiment shown, hydrophobic membrane (46) does not cover inlet (36) or outlet (38) so as to allow the passage of liquids through the reaction chamber. Hydrophobic membrane (46) allows hydrogen gas to pass therethrough. However, liquids tend not to pass through the hydrophobic membrane. Therefore, the combination of hydrophobic membrane (46) and hydrophilic membranes (42) and (44) advantageously provide separation paths for the resultant liquid/gas mixture produced from a metal hydride solution such as sodium borohydride. Thus, reaction chamber (34) is also an integrated liquid/gas separator.

Hydrophobic membrane (46) may be made, at least in part, from Goretex®, Celgard®, or other material. Advantageously, the use of Goretex®, Celgard®, or other readily available material may be used as a liquid/gas separator in reaction chamber (34) itself because of the relatively low temperatures associated with the production of hydrogen gas from metal hydrides such as borohydrides, alkali hydrides, and the like. According to the present embodiment using sodium borohydride as the fuel source, the temperature of reactor (34) may not exceed about 93° C (200° F). In some embodiments the temperature does not exceed 80° C (176° F). In some embodiments the temperature of reactor (34) may not exceed the boiling point of the metal hydride solution or any other temperature that may compromise the material compatibility of any reactor component.

Hydrogen production system (100a) may also include a gas collection chamber or container (48), which may be adjacent to or surrounding reaction chamber (34). Hydrogen gas produced in reaction chamber (34) may pass through hydrophobic membrane (46) and enter gas collection chamber (48). Gas collection chamber (48) may provide a path (64) for the produced hydrogen to communicate with a fuel cell (32). Fuel cell (32) may then operate according to the descriptions provided above.

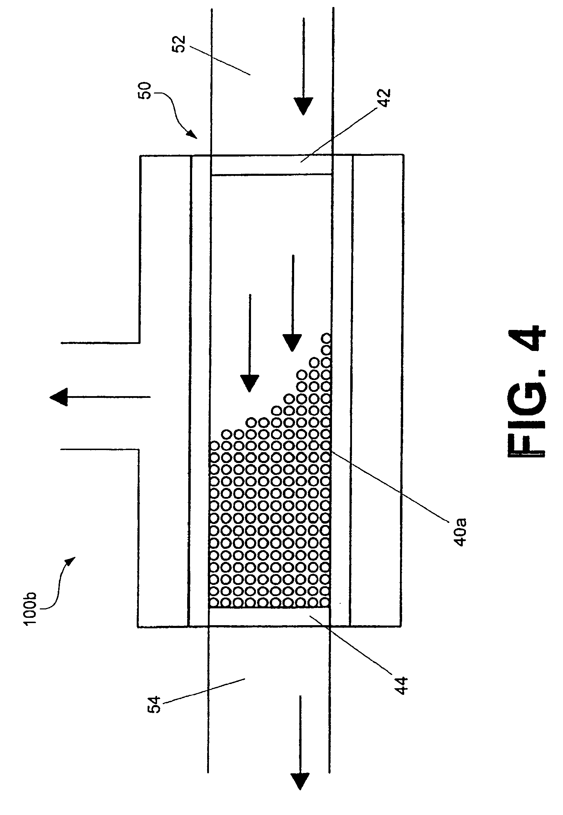

Turning next to FIG. 4, another embodiment of a gas generation system (100b) is disclosed. According to the embodiment of FIG. 4, a fuel source, for example sodium borohydride, may enter reaction chamber (50) through inlet (52). The flow of the fuel source and products is indicated by the arrows shown. As the sodium borohydride enters reaction chamber (50), it tends to engage catalyst bed (40a) and force the catalyst bed to "bunch up" toward outlet (54) in the direction of the fluid flow. Flow causes unconstrained catalyst beads or pellets (40a) to move in an uncontrolled manner. The redistribution of catalyst bed (40a) to the configuration shown in FIG. 4 may slow the rate of reaction and/or hinder the production of hydrogen gas.

Catalysts such as catalyst bed (40a) (which may include ruthenium, platinum, nickel, and other catalysts that are readily available to those of skill in the art having the benefit of this disclosure) are often very expensive and are most effective when a maximum surface area is exposed to the reactants. Therefore, the "bunching up" of catalyst bed (40a) as shown in FIG. 4 undermines the effectiveness of the catalyst (40a).

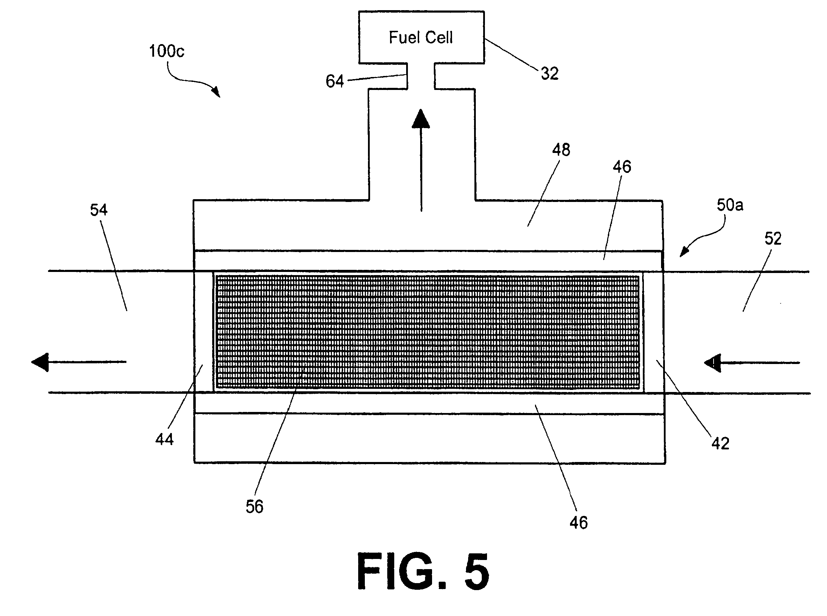

Turning next to FIG. 5, one example of a catalyst distribution structure for a gas generation system (100c) is shown. According to the embodiment of FIG. 5, a catalyst-plated, high surface area screen (56) is rolled and inserted into reaction chamber (50a). Catalyst-plated, high surface area screen (56) advantageously provides a structure that is not easily rearranged by the flow of reactants and products through the reaction chamber (50a). Therefore, the catalyst material continues to have a very high surface area exposed to the flow of reactants to maximize the reaction rate and thus the production of hydrogen from, for example, sodium borohydride.

The catalyst distribution structure may also include multiple catalyst-plated, high surface area mesh strips. The strips (appearing like screen (56) which is shown only in a one-dimensional view) may be placed in reaction chamber (50a) in a manner similar to high surface area screen (56).

Alternatively, the catalyst distribution structure may include catalyst-coated, high surface area fibrous material.

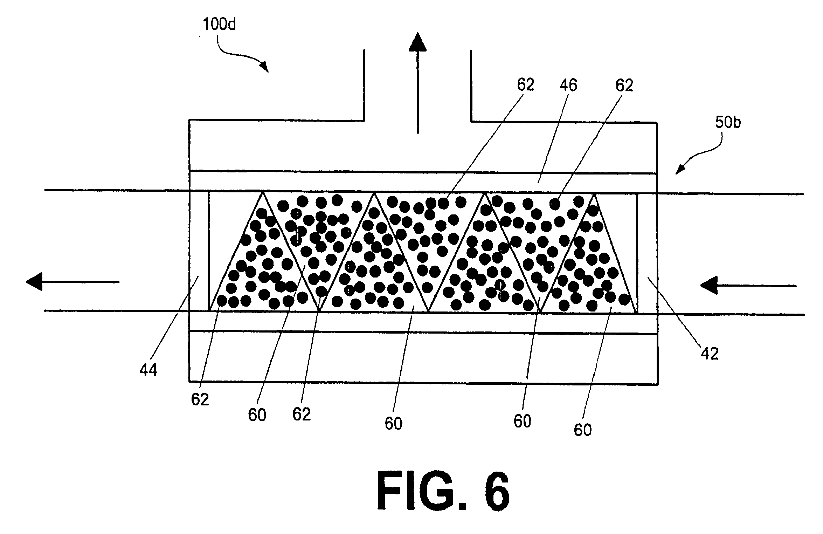

Turning next to FIG. 6, another embodiment for a catalyst distribution structure for use in a gas production system (100d) is shown. According to the embodiment of FIG. 6, the catalyst distribution structure includes multiple cells or chambers (60) within a reaction chamber (50b), each housing a portion of catalyst beads (62). The multiple cells (60) may include screen material or other material with some structural integrity that prevents the migration of catalyst beads (62) while allowing the passage of liquid solutions.

Operation of a gas generating reactor according to one or more of the embodiments explained above may be described as follows. For purposes of operational discussion, reference is made below to FIG. 5. However, it will be understood that the other embodiments shown are also germane to the operation of the gas generating reactor.

Referring now to FIG. 5, a reaction chamber (50a) for generating hydrogen may be located in proximity to a fuel cell (32). An aqueous solution of sodium borohydride or other solution is provided to flow continuously through reaction chamber (50a) as a hydrogen fuel source. The aqueous solution of sodium borohydride flows into reaction chamber (50a) through inlet (52). The aqueous solution may pass a hydrophilic screen (42) disposed in inlet (52). Hydrophilic screen (42) readily allows the passage of liquid solutions such as sodium borohydride.

After passing through inlet (52), the aqueous solution tends to flow along a path through the reaction chamber defined by hydrophobic membrane (46). Hydrophobic membrane (46) is resistant to the passage of liquids, but permeable to gases.

Once inside reaction chamber (50a), the solution of sodium borohydride produces hydrogen gas at an accelerated rate in the presence of a catalyst. The catalyst may be, for example, a ruthenium catalyst plated on high surface area screen (56). As the reaction progresses, hydrogen gas is released from the aqueous solution. The hydrogen may migrate through the gas permeable hydrophobic membrane (46) and into gas collection chamber (48) which, in the embodiment shown in FIG. 5, surrounds hydrophobic membrane (46).

Hydrogen gas produced in the reaction chamber (50a) may tend to flow with the stream of aqueous sodium borohydride toward the outlet (54) of reaction chamber (50a). However, hydrophilic membrane (44) prevents the passage of all or substantially all hydrogen gas therethrough. Second hydrophilic membrane (42) also prevents the passage of all or substantially all hydrogen gas, leaving hydrophobic membrane (46) as the path of least resistance for the hydrogen gas. Thus the hydrogen gas is separated from the liquids and other products by reaction chamber (50a).

As produced hydrogen gas passes through hydrophobic membrane (46) it collects in gas collection chamber (48). Gas collection chamber (48) may include a passageway (64) leading to fuel cell (34). Gas collection chamber (48) may release the collected hydrogen at a regular rate to the fuel cell (34), which may then operate according to any known mechanism to produce a supply of electricity.

The flow of sodium borohydride through reaction chamber (50a) may be recycled if desired to extract a maximum amount of hydrogen from the solution, or a fresh source of sodium borohydride or other material may be continuously supplied to the reaction chamber.

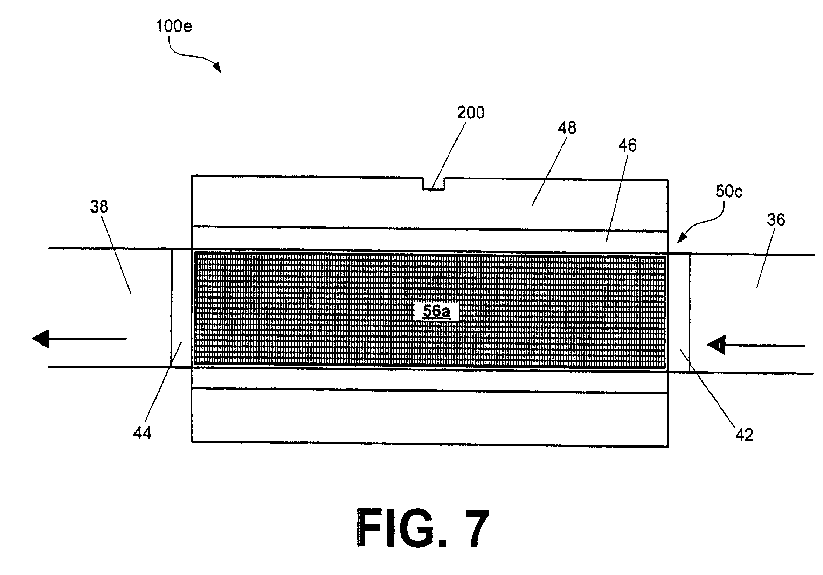

Referring next to FIG. 7, a gas cartridge (100e) is shown embodied as a hydrogen production cartridge. Hydrogen production cartridge (100e) may be inserted into a fuel cell receptacle or other apparatus requiring hydrogen. For example, hydrogen production cartridge (100e) may provide hydrogen to a PEM fuel cell similar to the one shown in FIG. 1. It will be understood by one of skill in the art having the benefit of this disclosure that hydrogen production cartridge (100e) may be used for other fuel cells as well.

According to the embodiment of FIG. 7, hydrogen production cartridge (100e) may include a reactor such as reaction chamber (50c). Reaction chamber (50c) includes a generally cylindrical shape as shown in the figure, but this is not necessarily so. Any convenient shape for reaction chamber (50c) may be used. Reaction chamber (50c) may be made of metal, plastic, ceramic, composite or other materials.

Reaction chamber (50c) may include a catalyst disposed therein, for example the catalyst screen (56a) shown in the figure. Catalyst screen (56a) may facilitate the production of hydrogen gas by increasing the rate of reaction of a fuel source. The catalyst may include a ruthenium catalyst, a platinum catalyst, a nickel catalyst, or other catalyst. Ruthenium, platinum, nickel, and other catalysts are readily available to those of skill in the art having the benefit of this disclosure.

Catalyst screen (56a) may facilitate the production of hydrogen gas in the presence of a borohydride. For example, an aqueous sodium borohydride solution in the presence of catalyst screen (56a) results in the release of hydrogen gas according to the equation (1) above.

Reaction chamber (50c) may include an inlet (36) for receiving a hydrogen fuel source such as sodium borohydride and an outlet (38) for discharging waste products and reactants in a continuous manner. Reaction chamber (50c) may thus advantageously facilitate continuous production of hydrogen gas as opposed to a batched process.

Located at the inlet (36) and outlet (38) of reaction chamber (50c) may be hydrophilic screens (42) and (44). Hydrophilic screens (42) and (44) readily allow the passage of liquid solutions therethrough. However, they prohibit the passage of all or substantially all hydrogen gas. Hydrophilic screens (42) and (44) may each include a stainless steel filter screen. The effective pore sizes of hydrophilic screens (42) and (44) are selected to balance pressure drop and bubble pressure to ensure liquid/gas separation. It is within the purview of the skilled artisan having the benefit of this disclosure to select an appropriate hydrophilic screen pore size according to the specific needs of the application. For example a stainless steel filter screen with an effective pore size of 6 µm may be chosen for some applications.

In some embodiments, only one of hydrophilic screens (42) and (44) may be used at either inlet (36) or outlet (38).

Reaction chamber (50c) may also include a hydrophobic membrane (46) surrounding catalyst screen (56a) for lining an internal or external surface of the reaction chamber (50c). In the embodiment shown, hydrophobic membrane (46) does not cover inlet (36) or outlet (38) so as to allow the passage of liquids through the reaction chamber. Hydrophobic membrane (46) allows hydrogen gas to pass therethrough. However, liquids tend not to pass through the hydrophobic membrane. Therefore, the combination of hydrophobic membrane (46) and hydrophilic membranes (42) and (44) advantageously provide separation paths for the resultant liquid/gas mixture produced from the metal hydride solution such as sodium borohydride. Thus, reaction chamber (50c) is also an integrated liquid/gas separator.

Hydrophobic membrane (46) may be made, at least in part, from Goretex^{®}, Celgard^{®}, or other material. Advantageously, the use of Goretex^{®}, Celgard^{®}, or other readily available material may be used as a liquid/gas separator in reaction chamber (50c) itself because of the relatively low temperatures associated with the production of hydrogen gas from metal hydrides such as borohydrides, alkali hydrides, and the like. According to the present embodiment using sodium borohydride as the fuel source, the temperature of reactor (50c) may not exceed about 93° C (200° F). In some embodiments the temperature does not exceed 80° C (176° F). In some embodiments the temperature of reactor (50c) may not exceed the boiling point of the metal hydride solution or any other temperature that may compromise the material compatibility of any reactor component.

Hydrogen production cartridge (100e) may also include a gas collection chamber or container (48), which may be adjacent to or surrounding reaction chamber (50c). Hydrogen gas produced in reaction chamber (50c) may pass through hydrophobic membrane (46) and enter gas collection chamber (48). Gas collection chamber (48) may include a gas supply port such as hydrogen port (200) for engagement with receptor (not shown) of a fuel cell or other hydrogen-consuming device into which the cartridge (100e) may be inserted. Hydrogen port (200) may automatically open upon insertion into a fuel cell receptacle, or it may be selectively operational between open and closed positions to allow hydrogen from the cartridge.

## Claims

1. A fuel cell apparatus comprising:
an anode (20);
a cathode (22);
an electrolyte (24) disposed between said anode (20) and cathode (22); and
a hydrogen reactor (102) for providing hydrogen to said anode (20), said hydrogen reactor (102) comprising a porous wall wrapped by a hydrophobic membrane (116) wherein said hydrogen reactor (102) has an inlet (36,52,106) for receiving a continuous flow of aqueous metal hydride solution and an outlet (38,54,108) for allowing the passage of the solution out of the hydrogen reactor (102).

2. The apparatus of claim 1, wherein said hydrogen reactor (102) further comprises a hydrophilic membrane (44) substantially impassable to hydrogen gas covering an outlet (38) to said hydrogen reactor.

3. The apparatus of claim 1 or claim 2, wherein said hydrogen reactor (102) comprises a hydrophobic gas-permeable membrane wrapped around a catalyst (104).

4. The apparatus of claim 1, further comprising a catalyst (40) disposed in a distribution structure (56) in said hydrogen reactor (102).

5. A method of gas production comprising producing and separating hydrogen gas from an aqueous solution flowing continuously through an integrated hydrogen reactor (102) of a fuel cell as defined in claim 1.

6. The method of claim 5, wherein the separating of hydrogen gas from said aqueous solution is facilitated by a hydrophobic hydrogen gas-permeable membrane (116) about said reactor (102).

## Patentansprüche

1. Eine Brennstoffzellenvorrichtung, die folgende Merkmale aufweist:
eine Anode (20);
eine Kathode (22);
einen Elektrolyten (24), der zwischen der Anode (20) und der Kathode (22) angeordnet ist; und
einen Wasserstoffreaktor (102) zum Liefern von Wasserstoff an die Anode (20), wobei der Wasserstoffreaktor (102) eine poröse Wand aufweist, die durch eine hydrophobe Membran (116) umwickelt ist, wobei der Wasserstoffreaktor (102) einen Einlass (36, 52, 106) zum Aufnehmen eines kontinuierlichen Stroms einer wässrigen Metallhydridlösung und einen Auslass (38, 54, 108) zum Ermöglichen des Austretens der Lösung aus dem Wasserstoffreaktor (102) aufweist.

2. Die Vorrichtung gemäß Anspruch 1, bei der der Wasserstoffreaktor (102) ferner eine hydrophile Membran (44) aufweist, die für Wasserstoffgas, das einen Auslass (38) zu dem Wasserstoffreaktor bedeckt, im Wesentlichen undurchlässig ist.

3. Die Vorrichtung gemäß Anspruch 1 oder 2, bei der der Wasserstoffreaktor (102) eine hydrophobe gasdurchlässige Membran aufweist, die um einen Katalysator (104) herum gewickelt ist.

4. Die Vorrichtung gemäß Anspruch 1, die ferner einen Katalysator (40) aufweist, der in einer Verteilungsstruktur (56) in dem Wasserstoffreaktor (102) angeordnet ist.

5. Ein Verfahren zur Gasproduktion, das ein Produzieren und Trennen eines Wasserstoffgases von einer wässrigen Lösung umfasst, die kontinuierlich durch einen integrierten Wasserstoffreaktor (102) einer Brennstoffzelle gemäß der Definition in Anspruch 1 strömt.

6. Das Verfahren gemäß Anspruch 5, bei dem das Trennen von Wasserstoffgas von der wässrigen Lösung durch eine hydrophobe, für Wasserstoffgas durchlässige Membran (116) um den Reaktor (102) herum ermöglicht wird.

## Revendications

1. Dispositif de pile à combustible comprenant :
■ une anode (20) ;
■ une cathode (22) ;
■ un électrolyte (24) disposé entre lesdites anode (20) et cathode (22) ; et
■ un réacteur à hydrogène (102) pour fournir l'hydrogène à ladite anode (20), ledit réacteur à hydrogène (102) comprenant une paroi poreuse enveloppée d'une membrane hydrophobe (116), dans lequel ledit réacteur à hydrogène (102) possède une admission (36, 52, 106) pour recevoir un flux continu de solution aqueuse d'hydrure métallique et une évacuation (38, 54, 108) pour permettre le passage de la solution à l'extérieur du réacteur à hydrogène (102).

2. Dispositif selon la revendication 1, dans lequel ledit réacteur à hydrogène (102) comprend en outre une membrane hydrophile (44) sensiblement imperméable au gaz hydrogène recouvrant une évacuation (38) dudit réacteur à hydrogène.

3. Dispositif selon la revendication 1 ou la revendication 2, dans lequel ledit réacteur à hydrogène (102) comprend une membrane perméable au gaz hydrophobe enveloppée autour d' un catalyseur (104) .

4. Dispositif selon la revendication 1, comprenant en outre un catalyseur (40) disposé dans une structure de distribution (56) dans ledit réacteur à hydrogène (102).

5. Procédé de production de gaz comprenant la production et la séparation de gaz hydrogène à partir d'une solution aqueuse s'écoulant en continu dans un réacteur à hydrogène intégré (102) d'une pile combustible telle que définie dans la revendication 1.

6. Procédé selon la revendication 5, dans lequel la séparation du gaz hydrogène à partir de ladite solution aqueuse est facilitée par une membrane perméable au gaz hydrogène hydrophobe (116) autour dudit réacteur (102).
